# EUROPÄISCHE PATENTSCHRIFT

(11) **EP 2 851 405 B1**
(45) Veröffentlichungstag und Bekanntmachung des Hinweises auf die Patenterteilung: **21.11.2018**
(21) Anmeldenummer: 14185137.8
(22) Anmeldetag: 17.09.2014
(51) Int. Cl.: C09D 183/04, C09J 7/40, C08L 83/04

(54) **Trennbeschichtung mit definierter Oberflächenstruktur**
Release coating with defined surface structure
Revêtement antiadhésif dotée d'une structure de surface définie

(30) Priorität: 20.09.2013 DE 102013218989
(43) Veröffentlichungstag der Anmeldung: 25.03.2015
(73) Patentinhaber: tesa SE, 22848 Norderstedt (DE)
(72) Erfinder: Aguilar Carazas, Robert Christian, 20357 Hamburg (DE); Zeysing, Björn, Dr., 22393 Hamurg (DE); Böcker, Dr. Patrick, 22397 Hamburg (DE)

(56) Entgegenhaltungen:
- WO-A1-2013/096076
- WO-A2-2011/050232
- DE-A1-102008 027 502

## Beschreibung

Die Erfindung betrifft allgemein eine Trennbeschichtung mit einer definierten Oberflächenstruktur. Weiter betrifft die Erfindung eine Trennbeschichtung, die auf einer vernetzten Silikonbeschichtung basiert, welche gezielt eingebrachte Fehlstellen aufweist. Ferner wird ein Verfahren zur Herstellung derartiger Trennschichten und deren Verwendung offenbart.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Haftklebemassen miteinander in Kontakt kommen, oder um bei einseitig klebenden Klebebändern ein leichteres Abrollen zu gewährleisten, wird die Klebmasse vor dem Wickeln des Klebebandes mit einem Abdeckmaterial (auch als Trennmaterial bezeichnet) bedeckt. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt.

Diese Releaseliner sorgen des Weiteren dafür, dass die Klebemasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Releaseliner zusätzlich dafür, dass beim Abrollen die richtige Seite der Klebemasse zuerst freigelegt wird.

Ein Liner oder Releaseliner (Trennmaterial, Trennpapier, Trennfolie) ist kein fester Bestandteil eines Klebebandes oder Etiketts, sondern in der Regel nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Abhäsive Beschichtungsmassen werden in großem Umfang zur Herstellung von Linern in der Beschichtung, insbesondere von flächigen Materialien, wie Papieren oder Folien, verwendet, um die Adhäsionsneigung von adhärierenden Produkten gegenüber diesen Oberflächen zu verringern. Wird ein doppelseitig klebendes, mit einem Liner ausgerüstetes Klebeband abgerollt, wird es normalerweise mit der offenen, also linerfreien Haftklebemassenseite auf einen Untergrund aufgeklebt. Die andere Haftklebemassenseite haftet währenddessen auf der beschichteten Oberfläche des Liners noch in genügendem Maße, um die Handhabung des Klebebands zu ermöglichen. Allerdings muss der Liner vom Klebeband abziehbar sein. Durch den Liner selbst oder durch das Abziehen des Liners darf die Klebkraft der Haftklebemasse nicht wesentlich für die spätere Verwendung beeinträchtigt werden. Gleichzeitig ist die Stabilität der antiadhäsiven Beschichtung (auch als Trennbeschichtung bezeichnet) auf dem Liner, also die Abhäsivität, über lange Zeiträume wichtig, um die Funktion dieser Beschichtung sowie die Eigenschaften der mit dem Liner eingedeckten Haftklebemasse zu gewährleisten.

Als Trennbeschichtung werden häufig vernetzbare Silikonsysteme eingesetzt. Dazu zählen Mischungen aus Vernetzungskatalysatoren und so genannten thermisch härtbaren kondensations- oder additionsvernetzenden Polyorganosiloxanen. Für kondensationsvernetzende Silikonsysteme sind als Vernetzungskatalysatoren häufig Zinnverbindungen, wie Dibutylzinndiacetat, in der Masse zugegen.

Silikonbasierende Trennbeschichtungen auf additionsvernetzender Basis lassen sich durch Hydrosilylierung härten. Diese Trennsysteme umfassen üblicherweise die folgenden Bestandteile: ein alkenyliertes Polydiorganosiloxan (insbesondere lineare Polymere mit endständigen Alkenylgruppen), ein Polyorganowasserstoffsiloxan-Vernetzungsmittel sowie einen Hydrosilylierungskatalysator. Typische Katalysatoren für additionsvernetzende Silikonsysteme sind Platin oder Platinverbindungen, wie zum Beispiel der Karstedt-Katalysator [eine Pt(0)-Komplexverbindung].

Als Releaseliner werden industriell Papier- oder Folienträger verwendet, die mit einer abhäsiven Beschichtungsmasse (auch als dehäsive oder anti-adhäsive Masse bezeichnet) ausgerüstet werden, um die Adhäsionsneigung von adhärierenden Produkten gegenüber diesen Oberflächen zu verringern (trennwirksame Funktion). Als derartige Massen, die auch Releasematerial genannt werden, können eine Vielzahl verschiedener Stoffe eingesetzt werden von denen vorstehend die Silikone bereits genannt wurden.

Darüber hinaus gibt es eine Reihe von beidseitig mit Klebmasse beschichtete Klebebänder, die zunächst mit einem im Produkt enthaltenen Releaseliner abgerollt und appliziert werden, so dass die zweite Klebmasse noch abdeckt ist.

Es ist bekannt, die äußere Oberfläche der Releaseliner, die mit der Haftklebemasse kaschiert wird, zu strukturieren. Alle bekannten Maßnahmen zur Strukturierung weisen jedoch bestimmte Nachteile auf, weil sie keine Herstellung einphasiger Beschichtungen erlauben und neue Grenzflächen in den Releaseliner eingebracht werden oder weil sie andererseits hinsichtlich der dreidimensionalen Gestaltungsfreiheit der Oberfläche stark begrenzt sind. Beispielsweise ist bei einer Extrusion nur die Ausbildung einer lammellenartigen Struktur möglich. Die vorgenannten Beschichtungen zeigen keine homogenen Eigenschaften und können an den Grenzflächen aufbrechen.

Die US 2006/0127626 offenbart ein Trägermaterial zur Verwendung in druckempfindlichen Klebebändern mit zwei gegenüberliegenden Oberflächen und einem auf einer der beiden Oberflächen aufgebrachten Material, das eine flächendeckende Struktur auf der Oberfläche bildet und optional zur Härtung nachbehandelt wird. Durch die Aufbringung eines weiteren Materials wird eine weitere Grenzfläche erzeugt.

Die US 2008/0078500 A1 beschreibt mittels Extrusion durch ein Formwerkzeug hergestellte, profilierte Releaseliner. Die Profile weisen eine maximale Höhe von 100 Mikrometer auf. Alternativ kann der profilierte Releaseliner durch Extrusion auf ein bestehendes Substrat hergestellt werden.

US 2008/0233356 A1 offenbart ein Beschichtungsverfahren basierend auf der Auftragung einer polymeren, nicht-Newtonschen Flüssigkeit mit Bingham Fluss oder Herschel-Bulkeley Eigenschaften τ₀ >10 dyn/cm². Dies ist nur durch den Zusatz von Additiven möglich, die in den offenbarten Beispielen auch das Trennverhalten des Silikons beeinflussen. Der Zusatz von Additiven bedeutet, dass migrationsfähige Zusätze in die Beschichtung eingetragen werden und zu einem nachteiligen Verhalten der Klebebänder führen können.

Die WO 2011/139573 A2 betrifft die Herstellung lamellenartig strukturierter katalysatorfreier Silikonbeschichtungen, die zunächst durch Inkontaktbringen mit einer Negativform eine strukturierte Oberfläche erhalten und anschließend Elektronenstrahl vernetzt werden.

Die DE 102008 027 502 A1 betrifft ein Verfahren zur Herstellung eines Releaseliners, umfassend zumindest eine vernetzte Silikonbeschichtung auf Basis additionsvernetzender Polysiloxane sowie Hydrosilylierungskatalysatoren, wobei die Silikonbeschichtung mit Verbindungen behandelt wird, die für die Hydrosilylierungskatalysatoren als Kontaktgifte wirken, weiterhin einen derart erhältlichen Releaseliner sowie die Verwendung von Verbindungen, die für Hydrosilylierungskatalysatoren als Kontaktgifte wirken, zur Behandlung einer auf einem Releaseliner befindlichen Silikonbeschichtung zur Regulierung der Abzugskräfte, mit denen der Releaseliner von einer auf ihn beschichteten Haftklebemasse abgezogen werden kann. Aufgabe der vorliegenden Erfindung war die Herstellung von Trennschichten mit strukturierten Oberflächen, insbesondere mit definiert strukturierten Oberflächen, die ohne eine Verwendung von profilierten Extruderwerkzeugen auskommt. Ferner sollte das Verfahren mit üblichen Trägern und den üblichen Silikonsystemen durchführbar sein, ohne diesen Additive, die im Produkt verbleiben, zuzusetzen. Aufgabe der Erfindung war es, ein Verfahren aufzufinden, dass eine wirtschaftliche, reproduzierbare und möglichst auf einer Bandanlage durchführbare Strukturierung von Trennschichten ermöglicht, wobei die Strukturierung der Oberfläche der Trennschicht reproduzierbar und zugleich leicht variierbar hergestellt werden können soll, vorzugsweise ohne weitere Grenzflächen in die Trennschicht einzubringen und vorzugsweise ohne eine aufwendige Herstellung neuer Extruderdüsen. Zugleich sollte das Verfahren die Herstellung von dreidimensionalen Strukturen oder Topographien in der Trennschicht erlauben.
Gelöst wird diese Aufgabe durch eine Trennbeschichtung, wie sie im Hauptanspruch niedergelegt ist. Gegenstand der Unteransprüche sind vorteilhafte Fortbildungen des Erfindungsgegenstandes. Weitere vorteilhafte Ausgestaltungen werden in der Beschreibung detailliert beschrieben. Des Weiteren umfasst die Erfindung Verfahren zur Herstellung als auch die Verwendung der Trennbeschichtung.
Ein erster allgemeiner Gegenstand der Erfindung ist eine auf einem Trägermaterial aufgebrachte Trennbeschichtung, die dadurch gekennzeichnet ist, dass sie eine unter Mitwirkung eines Hydrosilylierungskatalysators additionsvernetzte Silikonbeschichtung ist, wobei die Silikone ausgewählt aus der Gruppe Silikone, fluorierte Silikone, Silikon-Copolymere und Mischungen aus zwei oder mehreren der genannten Silikone sind, und mindestens eine durch eine lokale Inhibierung der Silikon-Vernetzungsreaktion gebildete Fehlstelle aufweist, wobei die Fehlstellen in Form von Löchern oder Fugen vorliegen. Die erfindungsgemäße Trennbeschichtung weist bevorzugt eine chemische Prägung auf.
Unter einer "Fehlstelle" wird ein Bereich der Abwesenheit von vernetzter Silikonmasse verstanden. An den Positionen, an denen die Inhibitoren wirksam werden, liegen dementsprechend lokale Durchbrechungen der Trennbeschichtung vor. Im Bereich der Fehlstellen stellt daher die Trägerfolie die äußere Oberfläche des Schichtverbundes aus Trägermaterial und Trennbeschichtung dar.

Bevorzugt ist die erfindungsgemäße Trennbeschichtung eine unter Mitwirkung eines Hydrosilylierungskatalysators additionsvernetzte Silikonbeschichtung, wobei die Silikone ausgewählt sind aus der Gruppe Silikone, fluorierte Silikone, Silikon-Copolymere und Mischungen aus zwei oder mehreren der genannten Silikone.

Bekannte Verfahren aus dem Stand der Technik beruhten bislang auf einer mechanischen Strukturierung oder dem zusätzlichen Aufdrucken einer weiteren Schicht. Mit der erfindungsgemäßen Trennbeschichtung gelingt es, eine Strukturierung oder Topographie dieser Beschichtung bereits während der Vernetzung bzw. durch die Vernetzung chemisch herzustellen, zu übertragen und/oder zu fixieren. Die erfindungsgemäße Trennbeschichtung weist bevorzugt eine definierte Makrostruktur (Position der Fehlstellen) und/oder eine definierte Mikrostruktur (Größe bzw. Größenverteilung) der jeweiligen Fehlstellen auf.

Die vorgenannten Hydrosilylierungskatalysatoren umfassen zum Beispiel Ruthenium, Rhodium, Palladium, Osmium, Indium oder insbesondere Platin, deren Komplexe und Verbindungen und/oder Katalysatorsysteme aus mehreren dieser Katalysatoren. Besonders bevorzugte Hydrosilylierungskatalysatoren umfassen Platin, eine Platin-Komplexverbindung oder eine Platinverbindung, beispielsweise den Karstedt-Katalysator (aus der Umsetzung von Hexachloridoplatinsäure in einem inerten Lösemittel mit Tetramethyl-1,3-divinyldisiloxan).

Inhibitoren, die auch als Kontakt- oder Katalysatorgifte bezeichnet werden können, sind Stoffe, die mit einem Katalysator reagieren und dadurch temporär oder permanent seine Wirkung mindern oder auch gänzlich unterbinden, also Stoffe, die bei Kontakt mit Katalysatoren diese desaktivieren.

Als Inhibitoren werden bevorzugt Kontaktgifte für die Katalysatoren gewählt. Besonders bevorzugt sind Kontaktgifte für die häufig verwendeten Hydrosilylierungskatalysatoren wie Chloroplatinsäure, Platinacetylacetonat, Komplexe von Platin(II)-halogeniden mit ungesättigten Verbindungen; wie beispielsweise Ethylen, Propylen, Organovinylsiloxanen, Styrol; Hexamethyldiplatin, PtCl₂PtCl₃, Pt(CN)₃.

Die erfindungsgemäßen Trennbeschichtungen werden vor der Vernetzung mit den Inhibitoren behandelt, vorzugsweise werden die Inhibitoren auf der Oberfläche der unvernetzten Trennbeschichtung an definierten Positionen aufgetragen. Geeignete Verbindungen, die für die Hydrosilylierungskatalysatoren als Kontaktgifte wirken, umfassen Schwefel-, Stickstoff- und/oder Phosphor-haltige Verbindungen, die auch als Kontaktgifte bezeichnet werden können.

Die erfindungsgemäße Trennbeschichtung weist bevorzugt nur eine einzige Silikonschicht auf. Somit umfassen die bevorzugten Trennbeschichtungen keine zweischichtigen Silikonbeschichtungen mit zwischen den Silikonbeschichtungen liegenden Grenzflächen, die ein unkontrolliertes Abreißen oder Lösen der beiden Silikonbeschichtungen hervorrufen können, wie es beispielweise durch ungewollt in der Grenzschicht eingeschlossene Luftblasen verursacht werden kann.

Weitere Vorteile der erfindungsgemäßen Trennbeschichtung sind eine definierte Makrostruktur der Silikonbeschichtung bezüglich der Position der Fehlstellen und/oder eine definierte Mikrostruktur bezüglich deren Größe bzw. Größenverteilung. Einzig durch die Inhibierung der Vernetzungsreaktion während der Vernetzung der Silikonbeschichtung kann durch die definierte Aufbringung von Inhibitoren auf der noch unvernetzten Silikonbeschichtung die Position der Fehlstellen und ihre dreidimensionale Geometrie eingestellt werden. An den mit Inhibitoren dotierten Positionen wird die Vernetzung der Polyorganosiloxane unterbunden, so dass nach der Vernetzung die an diesen Positionen nicht vernetzten Polyorganosiloxane entfernt werden können, vorzugsweise indem sie in einem Lösemittel oder Lösemittelgemisch zusammen mit den Inhibitoren aufgenommen werden. Die so behandelte strukturierte erste Oberfläche der Trennschicht ist anschließend vorzugsweise frei von Inhibitoren und nicht vernetzten Polyorganosiloxanen.

Vorzugsweise liegen die Fehlstellen der erfindungsgemäßen Trennbeschichtung in Form von Löchern oder Fugen vor. Besonders bevorzugt liegen die Fehlstellen in Form von Löchern mit einer zylindrischen, kegelförmigen, polyedrischen, rechteckigen, quadratischen oder irregulären dreidimensionalen Geometrie vor. Ebenfalls bevorzugt liegen die Fehlstellen irregulär oder regulär angeordnet, in Form eines Musters, Motivs, Gitters, in Form von Lamellen, Fugen, Information, Datenpunkten, Schrift, Barcodes, 2D-Barcodes, sinusförmig, in Form einer Überlagerung von mindestens zwei der vorgenannten Anordnungen, einer Aneinanderreihung von mindestens zwei der vorgenannten Anordnungen und/oder einer Zusammenstellung von mindestens zwei der vorgenannten Anordnungen vor. Auch die Herstellung von Fingerprints ist denkbar.

Die Fläche bzw. Ebene der Öffnung einer Fehlstelle kann mittels eines Durchmessers definiert werden, der größer gleich 10 nm bis hin zu zwei äußeren sich gegenüberliegenden seitlichen Begrenzungen der Trennschicht betragen kann. Typisch ist dies bei einer Ausbildung von Lamellen und/oder Fugen, die von einer seitlichen Begrenzung der Trennschicht zu einer weiteren seitlichen Begrenzung der Trennschicht reichen können.

Im erfindungsgemäßen Sinn wird unter einer dreidimensionalen Geometrie ein dreidimensionaler Hohlkörper einer dreidimensional beschränkten geometrischen Form verstanden, welche durch Grenzflächen, insbesondere die innere Oberfläche der Fehlstellen in der Silikonbeschichtung und die Ebene der Öffnung der Fehlstelle, beschrieben werden kann. Eine geometrische Form heißt dreidimensional, wenn sie in keiner Ebene vollständig enthalten ist, und beschränkt, wenn es eine Kugel gibt, welche diese Form vollständig enthält. Die bekanntesten Körper besitzen flache oder kreisbeziehungsweise kugelförmige Grenzflächen. Als Beispiele dienen Zylinder, Kegel, Kugel, Prisma, Pyramide, Tetraeder, Würfel sowie die fünf regulären Polyeder. Wenn ein Körper ausschließlich von ebenen Flächen begrenzt wird, spricht man von einem Polytop oder von einem beschränkten Polyeder (Vielflächner). Demgemäß kann eine erfindungsgemäße Fehlstelle zumindest teilweise auch in Form eines der genannten Holkörper vorliegen oder ihnen angenähert sein, wie Parallelotop mit den Spezialfällen Quader und Hexaeder (Würfel); Prisma mit der Verallgemeinerung Zylinder und den Spezialfällen Quader und Hexaeder; Pyramide mit der Verallgemeinerung Kegel und dem Spezialfall Tetraeder; Antiprisma mit dem Spezialfall Oktaeder. "Angenähert" umfasst unter anderem auch abgerundete Kanten, Ecken sowie weitere Abweichungen von der Idealform.

Zur Herstellung der Trennbeschichtung wird vorzugsweise ein Silikon ausgewählt aus der Gruppe Silikon, fluoriertes Silikon, Silikon-Copolymere, oder Mischungen aus zwei oder mehr der genannten Stoffe verwendet. Das Trennmittel kann lösungsmittelhaltige und/oder lösungsmittelfreie Systeme sowie wässrige Dispersionen umfassen, bevorzugt werden lösungsmittelfreie Systeme.

Additionsvernetzende Silikonbasierende Trennbeschichtungen lassen sich durch Hydrosilylierung härten. Diese Silikonbeschichtungen umfassen üblicherweise die folgenden Bestandteile:
- ein alkenyliertes Polydiorganosiloxan, insbesondere lineare Polymere mit endständigen Alkenylgruppen,
- ein Polyorganowasserstoffsiloxan-Vernetzungsmittel sowie
- einen Hydrosilylierungskatalysator.

Als Katalysatoren für additionsvernetzende Silikonsysteme, auch Hydrosilylierungskatalysatoren genannt, werden bevorzugt vorgenanntes Platin oder Platinverbindungen, wie zum Beispiel der Karstedt-Katalysator (eine Pt(0)-Komplexverbindung), eingesetzt.

Die Molmassen der endgruppenständig alkenylierten Polydiorganosiloxane liegen vorzugsweise im Bereich von Mw 400 g/mol bis 20.000 g/mol, vorzugsweise 5000 g/mol bis 20.000 g/mol, und die Molmassen der endgruppenständig Si-H-Gruppen tragenden Polyorganowasserstoffsiloxan-Vernetzungsmittel liegen vorzugsweise bei größer gleich Mw 400 bis kleiner gleich 6000 g/mol.

Des Weiteren können fluorierte Silikone und/oder Silikon-Copolymere Verwendung finden.

Gemäß einer besonders vorteilhaften Ausführungsform der Erfindung weist die Trennbeschichtung die folgende Zusammensetzung auf:
- Als Trennbeschichtung wird ein additionsvernetzendes Silikonsystem bestehend aus einem vinylfunktionalisierten Polyorganosiloxan als Basispolymer, einem Methylhydrogensiloxan als Vernetzer, sowie einem Platinkatalysator eingesetzt. Weitere Anteile können andere übliche dem Fachmann geläufige Additive sein wie beispielsweise die Eigenschaften der Silikontrennbeschichtung modifizierende Harze, die auch als release modifier resin bezeichnet werden. Vorzugsweise werden MQ-Resin oder CRA eingesetzt.

Ein weiterer Gegenstand der Erfindung ist ein Verfahren zur Herstellung einer strukturierten Trennbeschichtung, das die folgenden Schritte umfasst:
(i) das Aufbringen einer vernetzbaren Silikonzusammensetzung auf mindestens einer Seite eines Trägermaterials,
(ii) das lokal begrenzte Aufbringen von die Silikon-Vernetzungsreaktion unterdrückenden Inhibitoren auf der vernetzbaren Silikonzusammensetzung,
(iii) das Durchführen der Silikon-Vernetzung, und
(iv) das Entfernen von unvernetzten Silikonen und der Inhibitoren.

Vorzugsweise findet die Vernetzung durch Erhitzen statt, besonders bevorzugt bei einer Temperatur größer gleich 30 °C, insbesondere oberhalb 40 bis 250 °C, besonders vorzugsweise zwischen 80 bis 200 °C, weiter bevorzugt zwischen größer gleich 120 bis 180 °C. Besonders bevorzugt weisen die entstehenden Fehlstellen in der Trennbeschichtung jeweils unabhängig eine Geometrie auf, die sich durch eine Inhibierung der Vernetzungsreaktion der Polyorganosiloxane, gefolgt von der Entfernung der nicht vernetzten Organopolysiloxane, bildet.

In den Begriff "Silikone" werden im Rahmen der Erfindung nicht nur die ohnehin von diesem Begriff umfassten reinen - also neben Si-O-Si-Gruppierungen ausschließlich organische Substituenten an den Si-Atomen enthaltenden - Polyorganosiloxane, sondern auch Polyorganowasserstoffsiloxane - also Si-H-Gruppierungen aufweisende Polyorganosiloxane - und Si-OH-Gruppierungen aufweisende Polyorganosiloxane einbezogen. Darüber hinaus gelten auch weitere funktionalisierte Polyorganosiloxane erfindungsgemäß als Silikone. Nicht von dem Begriff "Silikone" erfasst sind reine Polysiloxane, also neben Si-O-Si-Gruppierungen ausschließlich Wasserstoffatome als Substituenten an den Si-Atomen enthaltende Verbindungen.

Die vorgenannte Auftragung auf das Trägermaterial erfolgt, indem mindestens einseitig und optional zweiseitig eine Beschichtung durch Auftragen einer vernetzbaren Silikon-Zusammensetzung auf dem Trägermaterial hergestellt wird. Die vernetzbare Silikon-Zusammensetzung ist bevorzugt eine additionsvernetzende Silikon-Zusammensetzung, die Silikone umfassen dementsprechend vorzugsweise additionsvernetzende Polyorganosiloxane, und die vernetzbare Silikonzusammensetzung umfasst einen Hydrosilylierungskatalysator.

Vorteilhaft werden nach der Silikon-Vernetzung die Inhibitoren und nicht vernetzte Polyorganosiloxane entfernt. Vorzugsweise werden die Inhibitoren und nicht vernetzten Silikone beispielsweise durch einen Luftstrom, vorzugsweise durch Behandlung mit mindestens einem Lösemittel, einem Lösemittelgemisch oder einer wässrigen Lösung entfernt. Desweiteren ist es bevorzugt, wenn die Inhibitoren und nicht vernetzten Silikone mit Lösemitteln entfernt werden und nachfolgend die Lösemittel durch Trocknen im Vakuum und/oder bei erhöhter Temperatur oder mit einem Luftstrom entfernt werden. Geeignete Lösemittel umfassen organische Lösemittel wie protische, aprotische und/oder aromatische Lösemittel, vorzugsweise Alkohole wie Ethanol, Propanol, oder auch wässrige alkoholische Lösungen. Ebenso können Ether, Petrolether, Ketone, wie THF, Methyl-iso-butylketon, Benzin oder andere dem Fachmann bekannte und geeignete Lösemittel zur Entfernung der Inhibitoren und der nicht vernetzten Polyorganosiloxane verwendet werden.

Besonders bevorzugt wird die Vernetzung der Silikone, insbesondere der additionsvernetzenden Silikone, bei einer Temperatur größer gleich 30 °C bis 250 °C durchgeführt.

Die Vorteile des erfindungsgemäßen Verfahrens zeigen sich in der Möglichkeit, eine strukturierte einphasige Silikonbeschichtung ohne Limitierung der realisierbaren Makro- und/oder Mikrostrukturen der Oberfläche herstellen zu können und optional zugleich auf einen Zusatz von Additiven, die in der Silikonbeschichtung verbleiben, verzichten zu können.

Die erfindungsgemäßen Trennbeschichtungen können folglich Inhibitor-induziert bei der Vernetzung eine definierte Oberflächenstruktur erhalten, wobei auch das Trennverhalten gegenüber auf dieser Trennschicht aufgebrachten Klebmassen eingestellt werden kann. Zudem ist es nun möglich, Oberflächen in sehr hoher Auflösung von bis zu 10 nm und nach oben unbegrenzt, vorzugsweise jedoch bis in den Millimeterbereich, wie um 10 mm, zu strukturieren. Gemäß einer Alternative kann die Auflösung bis an zwei bis vier seitliche Begrenzungen der Trennbeschichtung oder eines mit der Trennbeschichtung beschichteten Trägers reichen. Beispielsweise kann eine sternförmige oder kreuzförmige Struktur mit sehr hoher Auflösung auf der Trennbeschichtung erzeugt werden.

Als Methoden zur Analyse der Makro- und/oder Mikrostruktur der Fehlstellen bieten sich die optische Mikroskopie an, die an nicht gefärbten oder auch an eingefärbten Proben, die mittels Pigmenten markiert wurden, durchgeführt werden kann. Weitere Methoden umfassen 2D-Raman-Mapping, EDX-Elektronenmikroskopie sowie Rasterkraftmikroskopie.

Bevorzugt umfassen die Silikone additionsvernetzende Polyorganosiloxane, und die vernetzbare Silikonzusammensetzung umfasst einen Hydrosilylierungskatalysator. Insbesondere könnte der Katalysator für die Hydrosilylierungsreaktion somit gehemmt werden, indem der Inhibitor irreversibel an das Metallzentrum des Katalysators koordiniert.

Bevorzugt werden als Inhibitoren schwefel-, stickstoff- und/oder phosphorhaltige Verbindungen eingesetzt. Besonders bevorzugt sind die Inhibitoren ausgewählt aus der Gruppe bestehend aus:
Aminen, z. B. Triethylamin, Melamin, Triethanolamin; Amiden, z. B. Dimethylformamid;Cyanaten, Nitrilen, z. B. Adiponitiril; Oximen, z. B. 2-Butoxim; Nitroso-Verbindungen, z. B. Alpha-Nitroso-beta-naphthol; Chelaten, z. B. EDTA; Ethylendiamintetraacetat, NTA-Nitriloessigsäure; Oxazolinen, z. B. 1,4-Bisoxazolinbenzol; Thioverbindungen, z. B. Thioessigsäure, Allylthioharnstoff, Dodecylmercaptan, Didodecyl-3-3'-Thiopropionat; Disulfiden, z. B. Dibenzyldisulfid; Zinnsalzen, z. B. solche wie sie bei zinnkatalysierten Silikon Release Beschichtungen zum Einsatz kommen; Phosphinen, z. B. Triphenylphosphin; Phosphiten, z. B. Triphenylphosphit; Arsen-Verbindungen, z. B. Triphenylarsin; Antimon-Verbindungen, z. B. Triphenylstiban; Seleniden, z. B. Diphenylselenid; nicht-aromatischen Heterocyclen mit einem freien Elektronenpaar umfassend 4 bis 20 C-Atome und Gemischen enthaltend mindestens zwei der vorgenannten Verbindungen.

Erfindungsgemäß besonders bevorzugt einsetzbare Kontaktgifte, insbesondere Platingifte, werden aus der Auflistung umfassend die folgenden Substanzen ausgewählt: ATMER 163 (Polyoxyethylen Cocoalkyl Amine, CAS 61791-31-9) Dyhard MI-C (2-Methyl-1H-imidazol, CAS: 693-98-1), Dyhard 100S (Dicyandiamid, CAS: 461-58-5), Diphenylamin (CAS: 122-39-4), Trieethylentetramin (CAS: 112-24-3), Irganfos 168 (Tris(2,4-di-tert-butylphenyl)phoshit, CAS: 31570-04-4), N-(2-Aminoethyl)piperarzin (CAS: 140-31-8), Dodecalamin (CAS: 124-22-1), Decedylmercaptan (CAS: 112-55-0), Weston 618 F (Distearyl Pentaerythritol Diphosphit, CAS: 3806-334-6), Tributylphosphit (CAS: 102-85-2), Triphenylphosphin (CAS: 603-35-0), Triphenylphosphit (CAS: 101-02-0), 1,4-Bisoxalinbenzol, Merbol (CAS: 00633-9), Irganox PS 800 (Dicocyl-3,3'-thiopropionat, CAS: 123-28-4), Irganox 565 (2,4-Bis(n-octyltio)-6-(4-hydroxy-3,5-di-tert.-butyl-anilino)-1,3-5-triazin, CAS: 991-84-4), 2-Ethylhexylthioglucolat (CAS: 25103-09-7) und/oder Pentaerythritol tetra(3-mercaptopropionat (CAS: 231-472-8).

Die Behandlung der Silikonschicht kann auf unterschiedliche Weise erfolgen. Der Inhibitor kann ohne oder auch mit Zusatz von Fremdstoffen, wie Trägergasen oder Lösungsmitteln oder dergleichen, auf die zu vernetzende Trennbeschichtung aufgebracht werden, insbesondere durch Auftragen, Aufwischen, Aufsprühen, Aufdrucken oder Aufwalzen. Der Inhibitor kann auch in An- oder Abwesenheit von Fremdstoffen aus der Gasphase aufgebracht, etwa aufgedampft, werden, oder als Aerosol; in Anwesenheit eines entsprechenden Fremdstoffs aufgebracht werden, etwa als Nebel oder als Dampf. Flüssig vorliegende Inhibitoren können direkt aufgebracht werden, insbesondere durch eines der nachstehend genannten Verfahren.

Erfindungsgemäß können die Inhibitoren mit üblichen Verfahren auf die noch unvernetzte Silikonbeschichtung, aufgebracht werden. Bevorzugt können die Inhibitoren mittels üblicher Druck- oder auch Transferverfahren aufgebracht werden. Zu nennen sind Contact-Printing, Gravurdruck, Tampondruck, Microcontact-Printing, Druckplatten, Ink-Jet-Printing, Flexo-Printing, Spray coating, Gravurwalzenauftrag. Siebdruck, Aerosol-Jet Printing. Die Inhibitoren werden besonders bevorzugt durch Druckverfahren, Pinseln, Tupfen, Streuen, Sieben, Sputtern, Sprühen, Einspritzen, Einritzen oder Gravieren aufgebracht. Die Auftragung der Inhibitoren kann dabei als Reinsubstanz, in Lösung, in einer Formulierung, als Paste, als Aerosol oder als Feststoff erfolgen. Je nach gewollter Struktur und Größe der Fehlstellen können Verbindungen zugesetzt werden, die einen Einfluss auf den Kontaktwinkel der Inhibitor-Lösung auf dem zu vernetzenden Silikon haben und entweder eine gute Benetzung der Oberfläche bis hin zu einer schlechten Benetzung der Oberfläche bewirken. Zur Auftragung kann beispielsweise eine Walze mit einer austauschbaren Kunststoffumhüllung als Druckplatte, bspw. aus kristallinem Polypropylen oder Teflon, verwendet werden.

Nach dem erfindungsgemäßen Verfahren kann im Anschluss an Schritt (iv) eine Trägerfolie mit einer Trennbeschichtung gewonnen werden, deren Trennbeschichtung eine vernetzte Silikonbeschichtung basierend auf in Gegenwart von Hydrosilylierungskatalysatoren additionsvernetzten Polyorganosiloxanen ist, wobei die Silikonbeschichtung auf der der Trägerfolie abgewandten ersten Oberfläche mindestens eine Fehlstelle definierter lokaler Position und/oder definierter Größe aufweist.

Gemäß einer weiteren bevorzugten Verfahrensvariante kann (a) eine Auftragung einer Zusammensetzung umfassend additionsvernetzende Polyorganosiloxane und Hydrosilylierungskatalysatoren auf eine Trägerfolie zur Herstellung einer mindestens einseitigen Beschichtung erfolgen, wobei die Beschichtung eine erste, der Trägerfolie abgewandte Oberfläche aufweist und eine gegenüberliegende zweite, der Trägerfolie zugewandte Oberfläche,
(b) an unabhängigen Positionen erfolgen jeweils voneinander unabhängige, lokal begrenzte Hemmungen von Additionsreaktionen während der Durchführung der Vernetzung, wobei die Vernetzung bei erhöhten Temperaturen durchgeführt wird, insbesondere durch Erhitzen, bei größer gleich 30 °C, 40 bis 250 °C, vorzugsweise zwischen 80 bis 200 °C, 120 bis 180 °C, und (c) eine Trennbeschichtung auf der Trägerfolie wird gewonnen. Die Vernetzung kann durch Zuführen von Wärme oder auch mittels Infrarotstrahlung erfolgen.

In beiden Verfahrensvarianten wird auf den Schritt (b) oder (iv) folgend auf der Oberfläche der Trennbeschichtung basierend auf einer Silikonbeschichtung eine definierte Makrostruktur bezüglich der Position der Fehlstellen und/oder eine definierte Mikrostruktur bezüglich der dreidimensionalen Geometrie (3D), der Größenverteilung und/oder der jeweiligen inneren Oberfläche der Fehlstellen gewonnen.

Gemäß einer weiteren Variante können in (b) die Additionsreaktionen gehemmt werden, indem selektiv Si-H-Gruppen der Polyorganosiloxane gehemmt, blockiert oder mit gegenüber Si-H-Gruppen reaktiven Verbindungen umgesetzt werden. Eine Umsetzung der Si-H-Gruppen kann beispielsweise mit gegenüber Si-H-Gruppen reaktiven niedermolekularen Verbindungen erfolgen. Dabei sollte jedoch die Bildung von Wasserstoff vermieden oder begrenzt werden. Alternativ können die geringen Mengen an Wasserstoff, die sich ggf. entwickeln, entfernt werden. Zur Hemmung der Si-H Gruppen eignet sich der Aufrag von Aminen, Säuren, Basen; im Prinzip sind alle chemischen Verbindungen geeignet, die in der Lage sind, den hydridischen Wasserstoff am Siliziumatom zu substituieren.

Zur Herstellung von Releaselinern mit zwei beidseitig angebrachten Trennbeschichtungen kann die Trägerfolie beidseitig mit Trennbeschichtungen versehen werden, die jeweils unterschiedliche Oberflächenstrukturen und Trenneigenschaften aufweisen können und optional mit Haftklebemassen kaschiert werden können.

Ein Gegenstand der Erfindung ist auch eine Trennbeschichtung, die nach einem erfindungsgemäßen Verfahren erhältlich ist.

Gegenstand der Erfindung ist darüber hinaus die Verwendung einer erfindungsgemäßen Trennbeschichtung zur Regulierung der Abzugskräfte, mit denen die Trennschicht von einer auf sie beschichteten Haftklebemasse abgezogen werden kann; zur Einstellung der lokalen Bedruckbarkeit, der lokalen Benetzbarkeit mit flüssigen Medien und/oder der Oberflächenrauigkeit einer auf sie beschichteten Haftklebemasse; zur Einstellung von Sicherheitsmerkmalen und/oder zur Informationsspeicherung.

Ebenfalls Gegenstand der Erfindung ist eine Trennbeschichtung, geeignet zur Verwendung mit einem Releaseliner, wobei die Trennbeschichtung eine vernetzte Silikonbeschichtung basierend auf in Gegenwart von Hydrosilylierungskatalysatoren additionsvernetzten Polyorganosiloxanen ist, und die Silikonbeschichtung auf mindestens einer der beiden Oberflächen mindestens eine Fehlstelleaufweist, die erhältlich ist durch eine lokale oberflächennahe Inhibierung der Additionsreaktion der Polyorganosiloxane, insbesondere eine Inhibierung der Additionsreaktion der Polyorganosiloxane an der ersten und/oder zweiten Oberfläche der Trennbeschichtung. Dabei kann die Trennbeschichtung die vorgenannte Makro- und/oder Mikrostruktur aufweisen, die vorzugsweise entsprechend einer vorgenannten Inhibierung einer Silikonbeschichtung erhalten werden kann. Bevorzugt weisen die Fehlstellen auf der Oberfläche der Trennbeschichtung jeweils unabhängig eine definierte Position auf der Oberfläche und eine definierte Geometrie auf.

Ein weiterer Gegenstand der Erfindung ist ein Releaseliner, der ein Trägermaterial und eine auf mindestens einer Seite des Trägermaterials aufgebrachte erfindungsgemäße Trennschicht bzw. eine Trennschicht, die nach einem erfindungsgemäßen Verfahren erhältlich ist, umfasst.

Gleichfalls Gegenstand der Erfindung ist die Verwendung eines erfindungsgemäßen Releaseliners in ein- oder beidseitig klebrigen Klebebändern, in Etiketten, Stanzlingen, Folien, als Fälschungsschutz, als bedruckbarer Releaseliner, als lokal mit fluiden Medien benetzbarer Releaseliner und/oder als Sicherheitsmerkmal. Üblicherweise wird ein einseitiges Klebeband auf der Klebemassenseite mit einem Releaseliner eingedeckt. Bei einem zweiseitigen Klebeband kann ein Releaseliner ausreichen, es können aber auch beide Klebemassenseiten mit jeweils einem Releaseliner ausgerüstet sein.

Gleichfalls Gegenstand der Erfindung ist eine erfindungsgemäße Trennbeschichtung als zumindest eine Schicht auf einem Releaseliner, mit dem ein- oder beidseitig klebendes Klebeband ein- oder beidseitig eingedeckt ist.

Gegenstand der Erfindung ist weiterhin die Verwendung von erfindungsgemäßen Trennbeschichtungen in Form zumindest einer Schicht auf einem Träger, so dass ein Releaseliner entsteht, welcher in direktem Kontakt zu einer (Haft)-Klebemasse eingesetzt werden kann. Hierzu wird die Beschichtung bevorzugt als geschlossene Schicht auf einen Releaseliner aufgetragen. Vorzugsweise ist der Releaseliner beidseitig mit der Trennbeschichtung ausgerüstet.

Erfindungsgemäß vorteilhafte, thermisch härtende Trennbeschichtungen auf Basis von additionsvernetzenden Silikonen sind häufig Mehrkomponentensysteme, welche typischerweise aus folgenden Komponenten bestehen:
a) einem linearen oder verzweigten Polydimethylsiloxan, welches aus ca. 80 bis 200 Dimethylsiloxan-Einheiten besteht und an den Kettenenden mit Vinyldimethylsiloxy-Einheiten abgestoppt ist, oder einem linearen Polydimethylsiloxan, welches aus ca. 80 bis 200 Dimethylsiloxan-Einheiten und ca. 1 bis 10 Methylvinylsiloxan-Einheiten besteht sowie an den Kettenenden mit Vinyldimethylsiloxy-Einheiten abgestoppt ist. Typische Vertreter sind zum Beispiel lösungsmittelfreie, additionsvernetzende Silikonöle, wie DEHESIVE® 920, 912 oder 610, alle kommerziell erhältlich bei Wacker-Chemie GmbH, oder wie SYL-OFF® SL 9104, kommerziell erhältlich bei Dow Corning GmbH;
b) einem linearen, cyclischen oder verzweigten Vernetzer oder einer beliebigen Mischung dieser, wobei der Vernetzer üblicherweise aus Methylhydrogensiloxy- und Dimethylsiloxy-Einheiten beziehungsweise nur aus Methylhydrogensiloxy-Einheiten zusammengesetzt ist und die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei Wacker-Chemie GmbH kommerziell erhältlich sind, oder der Vernetzer SYL-OFF® 7689, kommerziell erhältlich bei Dow Corning GmbH;
c) einem Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA® 17 oder CRA® 42, kommerziell erhältlich bei Wacker-Chemie GmbH, oder SYL-OFF® SL 9154, kommerziell erhältlich bei Dow Corning GmbH;
d) einem silikonlöslichen Platinkatalysator wie zum Beispiel einem Platindivinyltetramethyldisiloxan-Komplex, welcher üblicherweise als Karstedt-Komplex bezeichnet wird und beispielsweise unter der Bezeichnung Katalysator OL bei Wacker-Chemie GmbH oder unter der Bezeichnung SYL-OFF® 4000 bei Dow Corning GmbH kommerziell erhältlich ist.

Bevorzugt wird die Trennbeschichtung mit einer Schichtdicke von 0,1 bis 5,0 µm aufgebracht, weiter vorzugsweise von 0,2 bis 2,5 µm, besonders bevorzugt von 0,4 bis 2,0 µm.

Als Trägermaterial können insbesondere Papiere oder Folien eingesetzt werden. Als Folien werden dabei bevorzugt solche aus biaxial verstrecktem Polyethylenterephthalat, Polybuten, Polypropylen, Polyethylen, monoaxial verstrecktem Polypropylen, biaxial verstrecktem Polypropylen oder Polyethylen verwendet, besonders bevorzugt Polyolefinfolien (Polypropylen- und Polyethylenfolien) oder Polyesterfolien.

Als Klebemasse ist in dem Klebeband eine Haftklebemasse vorhanden, so dass sich ein einseitig klebendes Klebeband ergibt, in dem die Beschichtung als Trennmittel wirkt.
Als Haftklebemassen werden Klebemassen bezeichnet, die bereits unter relativ schwachem Andruck eine dauerhafte Verbindung mit dem Haftgrund erlauben. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen beruht auf ihren adhäsiven Eigenschaften und die Wiederablösbarkeit auf ihren kohäsiven Eigenschaften. Als Basis für Haftklebemassen kommen verschiedene Verbindungen in Frage.

Als Beispiele für Haftklebemassen, aber ohne eine Einschränkung vornehmen zu wollen, seien als vorteilhaft im Sinne dieser Erfindung die folgenden genannt: Acrylat-, Silikon-, Naturkautschuk-, Synthesekautschuk-, Styrolblockcopolymermassen, mit einem Elastomerblock aus ungesättigten oder hydrierten Polydienblöcken (Polybutadien, Polyisopren, Copolymeren aus beiden sowie weitere, dem Fachmann geläufige Elastomerblöcke) sowie weitere, dem Fachmann geläufige Haftklebemassen, für die insbesondere silikonhaltige Trennbeschichtungen verwendet werden können. Wird im Rahmen dieser Schrift von Haftklebemassen auf Acrylatbasis gesprochen, so seien hiervon auch ohne explizite Erwähnung Haftklebemassen auf Basis von Methacrylaten und auf Basis von Acrylaten und Methacrylaten umfasst, sofern nicht ausdrücklich anders beschreiben. Ebenfalls im Sinne der Erfindung sind Kombinationen und Blends mehrerer Basispolymere sowie mit Klebharzen, Füllstoffen, Alterungsschutzmitteln und Vernetzern additivierte Klebemassen, wobei die Aufzählung der Additive nur beispielhaft und nicht einschränkend zu verstehen ist.

Der Träger oder Liner des Klebebands wird einseitig mit dem bevorzugten Haftkleber aus Lösung oder Dispersion oder 100 %ig (zum Beispiel Schmelze) oder durch Coextrusion beschichtet. Alternativ ist eine Beschichtung durch Transfer einer Klebemassen-Schicht durch Kaschieren möglich. Die Klebeschicht(en) können durch Wärme oder energiereiche Strahlen vernetzt werden.

Zur Optimierung der Eigenschaften kann bevorzugt die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein.

Die Menge der Klebstoffschicht beträgt bevorzugt 10 bis 3000 g/m², vorzugsweise 25 bis 2000 g/m² (gemeint ist die Menge nach einer eventuell notwendigen Entfernung von Wasser oder Lösungsmittel; die Zahlenwerte entsprechen auch in etwa der Dicke in µm).

Vorteilhaft ist eine physikalische Vorbehandlung der mit Haftklebemasse zu beschichtenden Trägerseite zur Verbesserung der Haftung, beispielsweise durch Flamm-, Plasma- oder Coronabehandlung.

Bei Bedarf kann vor dem Aufbringen der Haftkleberschicht auf dem Träger eine Primerschicht, insbesondere lösungsmittelfrei wie zum Beispiel durch Coextrusion, aufgebracht werden, so dass sich zwischen der Trägerschicht und einer Haftkleberschicht eine Primerschicht befindet.

Als Primer sind die bekannten Dispersion- und Lösungsmittelsysteme verwendbar, zum Beispiel auf Basis von isopren- oder butadienhaltigen Kautschuken und/oder Cyclokautschuken. Isocyanate oder Epoxyharze als Additive verbessern die Haftung und erhöhen zum Teil auch die Scherfestigkeit des Haftklebstoffes. Physikalische Oberflächenbehandlungen wie Beflammung, Corona oder Plasma oder Coextrusionsschichten sind ebenfalls geeignet, die Haftung zu verbessern. Besonders bevorzugt ist die Nutzung vorgenannter Verfahren bei Verwendung lösungsmittelfreier Klebstoffschichten, insbesondere solche auf Acrylatbasis. Beschreibungen der üblichen Primer finden sich zum Beispiel in "Handbook of Pressure Sensitive Adhesive Technology", D. Satas, (3. Auflage).

Besonders vorteilhaft findet der erfindungsgemäße Releaseliner in einem Klebeband Verwendung, das zum Verbinden von Papier- oder Folienbahnen eingesetzt wird. Flache, bahnförmige Materialien, insbesondere Papier, werden zu Ballen gewickelt. Solche Ballen werden zum Beispiel papierverarbeitenden Maschinen oder Druckbeziehungsweise Verpackungsmaschinen zugeführt. Beim Dauerbetrieb solcher Anlagen ist es notwendig, an das Ende eines ersten Ballens des flachen, bahnförmigen Materials im fliegenden Wechsel den Beginn eines neuen aufgewickelten Ballens anzusetzen und in geeigneter Weise zu verbinden, ohne beim Wechsel der Rollen die schnelllaufenden Maschinen anhalten zu müssen. Dieser Vorgang wird als Spleißen (engl. "splice") bezeichnet. Hierfür werden in der Papierindustrie doppelseitig klebende Selbstklebebänder eingesetzt, die im Wesentlichen aus einer Trägerschicht und zwei Selbstklebemasseschichten bestehen, um eine Verbindung zwischen dem Ende der alten Materialbahn und dem Anfang der neuen Materialbahn herzustellen. Das Ende der alten Materialbahn wird dabei mit dem Anfang der neuen Materialbahn verklebt.

Zur Vermeidung der Produktpiraterie können aber auch Releaseliner hergestellt werden, die Sollbruchstellen aufweisen und bei denen optional unterschiedliche Trennkräfte an unterschiedlichen Stellen der Trennbeschichtung realisiert wurden. In diesen Systemen verbleibt ein Teil der Trennbeschichtung bei einem Versuch, diese zu entfernen, auf der Haftklebemasse zurück. Alternativ kann auch ein Teil der Klebmasse auf der Trennschicht nach Entfernen der Klebmasse von der Trennschicht zurückbleiben. Auch ist die Freisetzung von Farbe durch ein Lösen der Trennbeschichtung möglich, um ein Markenprodukt damit auszurüsten. Ebenso Gegenstand der Erfindung ist die Verwendung erfindungsgemäßer Releaseliner und erfindungsgemäßer Trennbeschichtungen als Sicherheitsmerkmal.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Etiketten, Stanzlinge und dergleichen.

Alle auf den vorstehenden Releaseliner anwendbaren bevorzugten Ausgestaltungsformen der Erfindung gelten entsprechend auch für den vorstehenden Releaseliner als bevorzugt. Insbesondere bevorzugt ist das Material der Trägerfolie ausgewählt aus der Gruppe bestehend aus biaxial verstrecktem Polyethylenterephthalat, Polybuten, Polypropylen, Polyethylen, monoaxial verstrecktem Polypropylen, biaxial verstrecktem Polypropylen und Polyethylen; und die Trennbeschichtung enthält ein additionsvernetztes Silikon als Trennmittel. Ganz besonders bevorzugt ist das Material der Trägerfolie monoaxial verstrecktes Polypropylen (MOPP).

"Lösungsmittelhaltige Trennbeschichtung" bzw. "lösungsmittelhaltiges Silikon-Trennsystem" bedeutet, dass das betreffende Trennsystem als tatsächlich lösungsmittelhaltiges System aufgetragen wird, nach der in der Regel thermisch initiierten Vernetzung jedoch nur noch maximal Spuren des Lösemittels im Trennsystem vorliegen. Der Fachmann spricht dennoch von einem "lösungsmittelhaltigen System" und kennzeichnet damit die speziellen Eigenschaften einer solchen Lösungsmittel-basiert erhaltenen Trennbeschichtung.

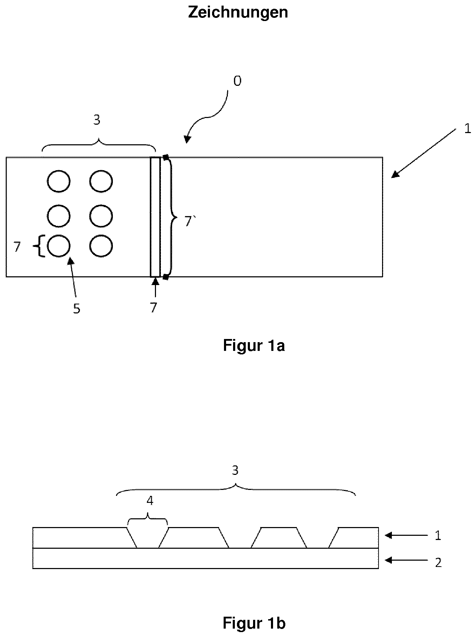

Die erfindungsgemäß hergestellten Releaseliner und Trennbeschichtungen werden in den Figuren 1a und b veranschaulicht, ohne die Erfindung auf diese Beispiele zu begrenzen. Die Figuren 1a und b zeigen schematisch eine erfindungsgemäße Trennbeschichtung mit Fehlstellen mit Darstellung einer Makro- (3) und Mikrostruktur (4).

So ist in Figur 1a ein Releaseliner (0) mit einer Trennbeschichtung (1) und einer durch die Inhibierung erhaltenen Makrostruktur (3) zusammen mit den jeweiligen Positionen der Fehlstellen (5) dargestellt. Eine Fehlstelle weist einen Durchmesser (7') auf, der sich über die gesamte Breite des Releaseliners in Form einer Fuge mit nur geringem Durchmesser (7) erstreckt. Bei Fehlstellen mit annähernd runden Öffnungen entspricht der Durchmesser (7) annähernd einem Kreisdurchmesser. Die Öffnung entspricht in diesem Fall einer Kreisebene. Figur 1b zeigt die Makrostruktur (3) sowie die Mikrostruktur (4) der Fehlstellen. So ist die innere Oberfläche einer Fehlstelle in Figur 1b zusätzlich profiliert.

Als Methoden zur Analyse der Makro- und/oder Mikrostruktur der Vertiefungen bieten sich die optische Mikroskopie an, die an nicht gefärbten oder auch an eingefärbten Proben, die mittels Pigmenten markiert wurden, durchgeführt werden kann. Weitere Methoden umfassen 2D-Raman-Mapping, EDX-Elektronenmikroskopie.

### Konkordanzliste:

0 Releaseliner
1 Trennbeschichtung aus vernetztem Silikon
2 Trägerfolie
3 Makrostruktur, entspricht der zweidimensionalen Anordnung der Positionen der Fehlstellen
4 Mikrostruktur, betrifft im Wesentlichen die Größe und ggf. die Form der Fehlstellen
5 Fehlstelle
7 Durchmesser der Fläche/Ebene, Durchmesser der Ebene der Öffnung einer Fehlstelle
7' Durchmesser der Öffnung einer Fehlstelle, die zugleich der äußeren Begrenzung der Releaseliner entspricht

### Beispiele

Die Erfindung soll im Folgenden durch Beispiele erläutert werden, ohne sie dadurch einzuschränken. Solange es nicht anders angegeben wird, sind alle Anteile von Komponenten jeweils auf ihr Gewicht bezogen angegeben.

**Silikonbeschichtung:**

| Basispolymer | Wacker DEHESIVE(R) 971 |
|---|---|
| Einwaage Basispolymer [g] | 9,9 |
| | |
| Vernetzer | Wacker V24 |
| Einwaage Vernetzer [g] | 0,4473 |
| | |
| Katalysator | Wacker Cat OL |
| Katalysator [ppm] | 80 |
| | |
| Additiv | Wacker HF 86 |
| Einwaage Additiv [g] | 0,1 |
| | |
| Lösemittel | Benzin 60/95 |
| Lösemittelzugabe [g] | 3,5091 |

### Herstellung und Beschichtung der Trennsysteme

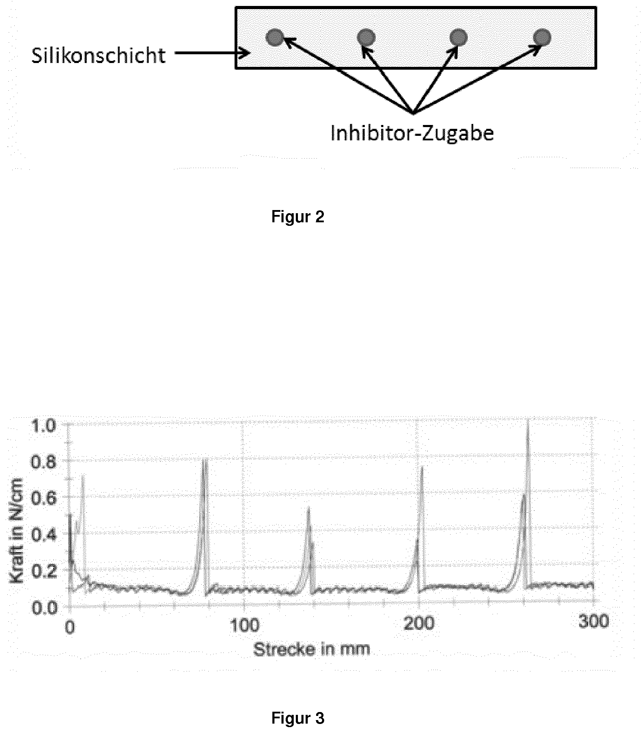

Es wurden Releaseliner auf einer 75 µm PET-Folie mit einem Single Roll Lab Coater der Fa. Euclid Coating Systems, Inc. hergestellt, indem die oben angegebene Trennsystem-Formulierung über eine Labor-Beschichtungsanlage aufgebracht wurde. Das Beschichtungsgewicht des Silikons lag bei 1,5 g/cm², was einer ca. 1,5 µm dicken Schicht entspricht. Nach der Beschichtung wurden an definierten lokalen Positionen ein Inhibitor (ATMER 163 (Polyoxyethylen Cocoalkyl Amine, CAS 61791-31-9) aufgetragen und die Trennsysteme im Umluftofen 15 s lang bei 150 °C vernetzt.
Das Schema der Positionierung der Inhibitor-Zugaben ist in Figur 2 dargestellt.
Die auf diese Art hergestellten Liner wurden im Hinblick auf ihre Trennkräfte mittels Zugprüfung sowie mikroskopisch untersucht.

### Messung der Abzugskraft / Kraftspitzen

Labormuster der oben beschriebenen Releaseliner wurden mit einer modifizierten lösungsmittelhaltigen Acrylatklebmasse beschichtet. Das Lösungsmittel wurde abgedampft und Klebmasse auf dem Liner über 15 Minuten / 120 °C vernetzt. Anschließend wurde mit geätzter PET-Folie (23µm) eingedeckt. Die Proben wurden über Nacht in einem klimatisierten Messraum bei 23 °C und 50 % relativer Luftfeuchtigkeit gelagert.

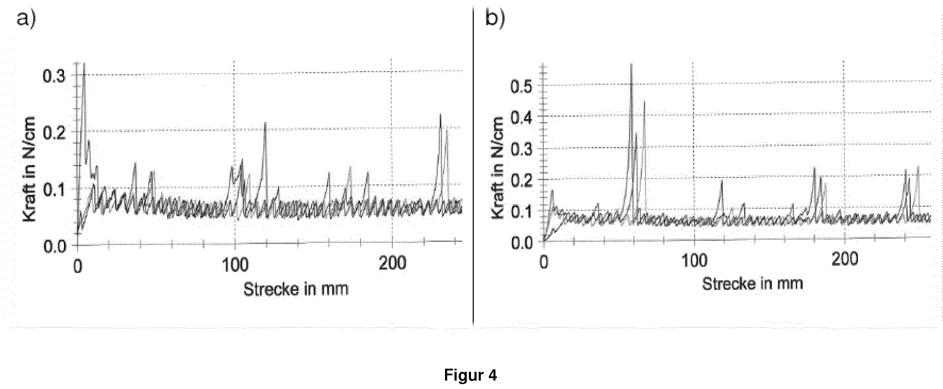

Anschließend wurde das Trennverhalten mit Hilfe einer Zugprüfung bestimmt. Hierzu wurden 20 mm Breite Streifen des Lappenmusters in eine Zugprüfmaschine eingespannt. Der Liner wurde bei 300 mm/min von der Klebmasse abgetrennt, die dabei auftretende Kraft wurde über eine Kraftmessdose protokolliert, zudem wurde die Zuglänge aufgenommen. Je nach Größe des erzeugten Fehlers ergaben sich Kraftspitzen, die dann einem bestimmten Loch zugeordnet wurden. Die Verteilung der Kraftspitzen über die Abzugsstrecke des Liners ist in den Figuren 3 und 4 dargestellt.

### Messung des Silikonauftrags

Der Auftrag des Trennsystems wurde über Röntgenfluoreszenzanalyse bestimmt. Dazu wird der mit dem zu untersuchenden Trennsystem beschichtete Träger mit dem Röntgenfluoreszenz-Analysator Lab-X³⁰⁰⁰ der Firma Oxford mit interner (Polydimethylsiloxan-) Referenz analysiert.

### Beispiel 1

Die Ergebnisse der Untersuchungen sind in Tabelle 1 sowie in Figur 3 dargestellt.
Prüfgeschwindigkeit: 300 m/min
Probenbreite: 20 mm
Vormessung 50 mm
Messweg: 250 mm

**Tabelle 1: Messung Kraftspitzen/Abzugskraft**

| Liner Nr. | Fmin (N/cm) | Fmax (N/cm) | Breite Muster (mm) |
|---|---|---|---|
| 1 | 0,05 | 1,00 | 20 |
| 2 | 0,05 | 0,55 | 20 |
| 3 | 0,05 | 0,79 | 20 |

Die in Figur 3 dargestellten Ergebnisse der vermessenen Kraftspitzen zeigen die Reproduzierbarkeit und enge Einstellbarkeit der Kraftspitzen auf einer erfindungsgemäßen Trennbeschichtung. Die bei den Releaselinern Nr. 1-3 festgestellten Kraftspitzen treten reproduzierbar an denselben Stellen der Abzugsstrecke - nämlich an den Fehlstellen der Trennbeschichtung - der Liner auf.

Die in Tabelle 1 dargestellten Werte zeigen, dass die erfindungsgemäßen Fehlstellen bei den hier durchgeführten Messungen einen lokalen Einfluss von bis zu 1,0 N/cm auf die Abzugskraft der Releaseliner zeigen. Fmin steht dabei für die Abzugskraft an den unversehrten Bereichen der Trennschicht, Fmax für die Abzugskraft an den Fehlstellen.

Tabelle 2 zeigt, dass die gemessenen Kraftspitzen bei der Delamination von Klebmasse mit der Größe der Fehlstellen in der Silikonschicht korrelieren.

**Tabelle 2: Messungen der Abzugskraft bei verschieden großen Fehlstellen**

| Durchmesser der Fehlstelle in mm | Kraftspitze bei Delamination der Klebmasse in N/cm |
|---|---|
| 0,50 | 0,225 |
| 0,61 | 0,240 |
| 0,75 | 0,330 |
| 0,78 | 0,350 |
| 0,86 | 0,390 |
| 0,89 | 0,430 |
| 0,90 | 0,440 |
| 0,95 | 0,450 |
| 1,02 | 0,500 |
| 1,13 | 0,570 |

### Vergleichsbeispiel 2

Herstellung und Beschichtung der Liner erfolgten wie oben beschrieben.
Die Erzeugung der Fehlstellen erfolgte jedoch derart, dass die Silikonschicht über mechanische Belastung durch Kratzen mit zwei verschiedenen Stahlkanülen mit 0,9 mm Durchmesser und 1,2 mm Durchmesser an definierten Stellen gezielt geschädigt wurde. Die auf diese Art hergestellten Liner wurden im Hinblick auf ihre Trennkräfte mittels Zugprüfung sowie mikroskopisch untersucht.

### Messung der Abzugskraft / Kraftspitzen

Die Ergebnisse der Abzugskraft-Messung sind in Figur 4 dargestellt; a) ist das Protokoll zu den Linern, deren Silikonschicht mit einer Kanüle mit 0,9 mm Durchmesser bearbeitet wurde, und b) ist das Protokoll zu den Linern, deren Silikonschicht mit einer Kanüle mit 1,2 mm Durchmesser bearbeitet wurde. Die nicht überlappenden Kraftspitzen zeigen, dass keine definierte und lokal gezielt steuerbare Einstellung des Trennverhaltens der Silikonschicht mit dieser Methode möglich ist.

## Patentansprüche

1. Auf einem Trägermaterial aufgebrachte Trennbeschichtung, **dadurch gekennzeichnet, dass**
die Trennbeschichtung eine unter Mitwirkung eines Hydrosilylierungskatalysators additionsvernetzte Silikonbeschichtung ist, wobei die Silikone ausgewählt aus der Gruppe Silikone, fluorierte Silikone, Silikon-Copolymere und Mischungen aus zwei oder mehreren der genannten Silikone sind, und
die Trennbeschichtung mindestens eine durch eine lokale Inhibierung der Silikon-Vernetzungsreaktion gebildete Fehlstelle aufweist, wobei die Fehlstellen in Form von Löchern oder Fugen vorliegen.

2. Trennbeschichtung nach Anspruch 1, **dadurch gekennzeichnet, dass** die Silikonbeschichtung eine definierte Makrostruktur bezüglich der Position der Vertiefungen und/oder eine definierte Mikrostruktur bezüglich der Größe und/oder Größenverteilung der jeweiligen Fehlstellen aufweist.

3. Trennbeschichtung nach Anspruch 1, **dadurch gekennzeichnet, dass** die Fehlstellen in Form von Löchern mit einer zylindrischen, kegelförmigen, polyedrischen, rechteckigen, quadratischen oder irregulären dreidimensionalen Geometrie vorliegen.

4. Trennbeschichtung nach einem der Ansprüche 1 bis 3, **dadurch gekennzeichnet, dass** die Fehlstellen irregulär, regulär, in Form eines Musters, Motivs, Gitters, in Form von Lamellen, Fugen, Information, Datenpunkten, Schrift, Barcodes, 2D-Barcodes, sinusförmig, in Form einer Überlagerung von mindestens zwei der vorgenannten Anordnungen, einer Aneinanderreihung von mindestens zwei der vorgenannten Anordnungen und/oder einer Zusammenstellung von mindestens zwei der vorgenannten Anordnungen vorliegen.

5. Verfahren zur Herstellung einer strukturierten Trennbeschichtung, umfassend
(i) das Aufbringen einer unter Mitwirkung eines Hydrosilylierungskatalysators additionsvernetzbaren Silikonzusammensetzung, wobei die Silikone ausgewählt aus der Gruppe Silikone, fluorierte Silikone, Silikon-Copolymere und Mischungen aus zwei oder mehreren der genannten Silikone sind, auf mindestens einer Seite eines Trägermaterials,
(ii) das lokal begrenzte Aufbringen von die Silikon-Vernetzungsreaktion unterdrückenden Inhibitoren auf der vernetzbaren Silikonzusammensetzung,
(iii) das Durchführen der Silikon-Vernetzung, und
(iv) das Entfernen von unvernetzten Silikonen und der Inhibitoren.

6. Verfahren nach Anspruch 5, **dadurch gekennzeichnet, dass** (iii) die Vernetzung bei einer Temperatur größer gleich 30 °C bis 250 °C durchgeführt wird.

7. Verfahren nach einem der Ansprüche 5 und 6, **dadurch gekennzeichnet, dass** (iv) die Inhibitoren und unvernetzten Silikone mit Lösemitteln entfernt werden.

8. Verfahren nach einem der Ansprüche 5 bis 7, **dadurch gekennzeichnet, dass** (ii) die Inhibitoren durch Druckverfahren, Pinseln, Tupfen, Streuen, Sieben, Sputtern, Sprühen, Einspritzen, Einritzen oder Gravieren aufgebracht werden.

9. Verfahren nach einem der Ansprüche 5 bis 8, **dadurch gekennzeichnet, dass** die Vernetzungssreaktion gehemmt wird, indem selektiv Si-H-Gruppen der Polyorganosiloxane gehemmt, blockiert oder mit gegenüber Si-H-Gruppen reaktiven Verbindungen umgesetzt werden.

10. Verfahren nach einem der Ansprüche 5 bis 9, **dadurch gekennzeichnet, dass** als Inhibitoren schwefel-, stickstoff- und/oder phosphorhaltige Verbindungen eingesetzt werden.

11. Verfahren nach einem der Ansprüche 5 bis 10, **dadurch gekennzeichnet, dass** die Inhibitoren ausgewählt sind aus der Gruppe bestehend aus Aminen, Amiden, Cyanaten, Nitrilen, Oximen, Nitroso-Verbindungen, Chelaten, Oxazolinen, Thioverbindungen, Disulfiden, Zinnsalzen, Phosphinen, Phosphiten, Arsen-Verbindungen, Antimon-Verbindungen, Seleniden, nicht-aromatischen Heterocyclen mit einem freien Elektronenpaar umfassend 4 bis 20 C-Atome und Gemischen enthaltend mindestens zwei der vorgenannten Verbindungen.

12. Verwendung einer Trennbeschichtung nach einem der Ansprüche 1 bis 4 zur Regulierung der Abzugskräfte, mit denen die Trennschicht von einer auf sie beschichteten Haftklebemasse abgezogen werden kann; zur Einstellung der lokalen Bedruckbarkeit, der lokalen Benetzbarkeit mit flüssigen Medien und/oder der Oberflächenrauigkeit einer auf sie beschichteten Haftklebemasse; zur Einstellung von Sicherheitsmerkmalen und/oder zur Informationsspeicherung.

13. Releaseliner, umfassend ein Trägermaterial und eine auf mindestens einer Seite des Trägermaterials aufgebrachte Trennschicht nach einem der Ansprüche 1 bis 4.

14. Verwendung eines Releaseliners nach Anspruch 13 in ein- oder beidseitig klebrigen Klebebändern, in Etiketten, Stanzlingen, Folien, als Fälschungsschutz, als bedruckbarer Releaseliner, als lokal mit fluiden Medien benetzbarer Releaseliner und/oder als Sicherheitsmerkmal.

## Claims

1. Release coating applied to a carrier material, **characterized in that**
the release coating is a silicone coating which is addition-cross-linked with the assistance of a hydrosilylation catalyst, the silicones being selected from the group of silicones, fluorinated silicones, siliconecopolymers and mixtures of two or more of the stated silicones, and
the release coating has at least one vacancy formed by local inhibition of the silicone crosslinking reaction, the vacancies being in the form of holes or joints.

2. Release coating according to Claim 1, **characterized in that** the silicone coating has a defined macrostructure in terms of the position of the depressions and/or a defined microstructure in terms of the size and/or size distribution of the respective vacancies.

3. Release coating according to Claim 1, **characterized in that** the vacancies are in the form of holes having a cylindrical, conical, polyhedral, rectangular, square or irregular three-dimensional geometry.

4. Release coating according to any of Claims 1 to 3, **characterized in that** the vacancies are present irregularly, regularly, in the form of a pattern, motif, lattice, in the form of lamellae, joints, information, data points, text, barcodes, 2D barcodes, sinusoidally, in the form of a superimposition of at least two of the aforesaid arrangements, a concatenation of at least two of the aforesaid arrangements and/or an assembly of at least two of the aforesaid arrangements.

5. Method for producing a structured release coating, comprising
(i) the application of a silicone composition which is addition-crosslinkable with the assistance of hydrosilylation catalyst, the silicones being selected from the group of silicones, fluorinated silicones, silicone copolymers and mixtures of two or more of the stated silicones, to at least one side of a carrier material,
(ii) the locally confined application of inhibitors suppressing the silicone crosslinking reaction to the crosslinkable silicone composition,
(iii) the implementation of silicone crosslinking, and
(iv) the removal of non-crosslinked silicones and of the inhibitors.

6. Method according to Claim 5, **characterized in that** (iii) the crosslinking is implemented at a temperature greater than or equal to 30°C to 250°C.

7. Method according to either of Claims 5 and 6, **characterized in that** (iv) the inhibitors and non-crosslinked silicones are removed with solvents.

8. Method according to any of Claims 5 to 7, **characterized in that** (ii) the inhibitors are applied by printing methods, brushing, dabbing, scattering, sieving, sputtering, spraying, injecting, scoring or engraving.

9. Method according to any of Claims 5 to 8, **characterized in that** the crosslinking reaction is inhibited by subjecting Si-H groups of the polyorgano-siloxanes to selective inhibition, blocking or reaction with compounds reactive towards Si-H groups.

10. Method according to any of Claims 5 to 9, **characterized in that** inhibitors used comprise sulfur-, nitrogen- and/or phosphorus-containing compounds.

11. Method according to any of Claims 5 to 10, **characterized in that** the inhibitors are selected from the group consisting of amines, amides, cyanates, nitriles, oximes, nitroso compounds, chelates, oxazolines, thio compounds, disulfides, tin salts, phosphines, phosphites, arsenic compounds, antimony compounds, selenides, non-aromatic heterocycles having a free electron pair, comprising 4 to 20 carbons, and mixtures comprising at least two of the aforesaid compounds.

12. Use of a release coating according to any of Claims 1 to 4 for regulating the peel forces with which the release layer can be peeled from a pressure-sensitive adhesive coated thereon; for adjusting the local printability, the local wettability with liquid media and/or the surface roughness of a pressure-sensitive adhesive coated thereon; for setting security features and/or for storing information.

13. Release liner comprising a carrier material and, applied to at least one side of the carrier material, a release layer according to any of Claims 1 to 4.

14. Use of a release liner according to Claim 13 in single-sidedly or double-sidedly adhesive tapes, in labels, diecuts, films, as forgery protection, as printable release liner, as release liner wettable locally with fluid media, and/or as security feature.

## Revendications

1. Revêtement anti-adhérent appliqué sur un matériau support, **caractérisé en ce que** le revêtement anti-adhérent est un revêtement de silicone réticulé par addition avec la participation d'un catalyseur d'hydrosilylation, les silicones étant choisies dans le groupe constitué par les silicones, les silicones fluorées, les copolymères de silicone et les mélanges de deux ou plus des silicones mentionnées, et
le revêtement anti-adhérent comprenant au moins un défaut formé par une inhibition locale de la réaction de réticulation des silicones, les défauts se présentant sous la forme de trous ou de joints.

2. Revêtement anti-adhérent selon la revendication 1, **caractérisé en ce que** le revêtement de silicone présente une macrostructure définie au regard de la position des creux et/ou une microstructure définie au regard de la taille et/ou de la distribution de tailles de chacun des défauts.

3. Revêtement anti-adhérent selon la revendication 1, **caractérisé en ce que** les défauts se présentent sous la forme de trous ayant une géométrie cylindrique, conique, polyédrique, rectangulaire, quadratique ou tridimensionnelle irrégulière.

4. Revêtement anti-adhérent selon l'une quelconque des revendications 1 à 3, **caractérisé en ce que** les défauts se présentent sous forme irrégulière, sous forme régulière, sous la forme d'un modèle, d'un motif, d'une grille, sous la forme de lamelles, de joints, d'informations, de points de données, d'une écriture, d'un code-barres, d'un code-barres 2D, sous forme sinusoïdale, sous la forme d'une superposition d'au moins deux des agencements susmentionnés, d'une séquence d'au moins deux des agencements susmentionnés et/ou d'une combinaison d'au moins deux des agencements susmentionnés.

5. Procédé de fabrication d'un revêtement anti-adhérent structuré, comprenant :
(i) l'application d'une composition de silicone réticulable par addition avec la participation d'un catalyseur d'hydrosilylation, les silicones étant choisies dans le groupe constitué par les silicones, les silicones fluorées, les copolymères de silicone et les mélanges de deux ou plus des silicones mentionnées, sur au moins un côté d'un matériau support,
(ii) l'application limitée localement d'inhibiteurs supprimant la réaction de réticulation des silicones sur la composition de silicone réticulable,
(iii) la réalisation de la réticulation des silicones, et
(iv) l'élimination des silicones non réticulées et des inhibiteurs.

6. Procédé selon la revendication 5, **caractérisé en ce que** (iii) la réticulation est réalisée à une température allant de supérieure ou égale à 30 °C à 250 °C.

7. Procédé selon l'une quelconque des revendications 5 et 6, **caractérisé en ce que** (iv) les inhibiteurs et les silicones non réticulées sont éliminés avec des solvants.

8. Procédé selon l'une quelconque des revendications 5 à 7, **caractérisé en ce que** (ii) les inhibiteurs sont appliqués par des procédés d'impression, par peinture, par mouchetage, par répartition, par tamisage, par pulvérisation, par atomisation, par injection, par scarification ou par gravure.

9. Procédé selon l'une quelconque des revendications 5 à 8, **caractérisé en ce que** la réaction de réticulation est inhibée en inhibant, bloquant ou mettant en réaction avec des composés réactifs avec les groupes Si-H sélectivement des groupes Si-H des polyorganosiloxanes.

10. Procédé selon l'une quelconque des revendications 5 à 9, **caractérisé en ce que** des composés contenant du soufre, de l'azote et/ou du phosphore sont utilisés en tant qu'inhibiteurs.

11. Procédé selon l'une quelconque des revendications 5 à 10, **caractérisé en ce que** les inhibiteurs sont choisis dans le groupe constitué par les amines, les amides, les cyanates, les nitriles, les oximes, les composés nitroso, les chélates, les oxazolines, les composés thio, les disulfures, les sels d'étain, les phosphines, les phosphites, les composés d'arsenic, les composés d'antimoine, les séléniures, les hétérocycles non aromatiques contenant une paire d'électrons libres et comprenant 4 à 20 atomes C, et les mélanges contenant au moins deux des composés susmentionnés.

12. Utilisation d'un revêtement anti-adhérent selon l'une quelconque des revendications 1 à 4 pour la régulation des forces de retrait avec lesquelles la couche anti-adhérente peut être retirée d'une masse adhésive de contact revêtue sur celle-ci ; pour l'ajustement de la capacité d'impression locale, de la capacité de mouillage locale avec des matériaux liquides et/ou de la rugosité de surface d'une masse adhésive de contact revêtue sur celle-ci ; pour l'ajustement de caractéristiques de sécurité et/ou pour le stockage d'informations.

13. Revêtement intérieur anti-adhérent, comprenant un matériau support et une couche anti-adhérente selon l'une quelconque des revendications 1 à 4 appliquée sur au moins un côté du matériau support.

14. Utilisation d'un revêtement intérieur anti-adhérent selon la revendication 13 dans des bandes adhésifs simple ou double face, dans des étiquettes, dans des articles découpés, des feuilles, en tant que protection contre la falsification, en tant que revêtement intérieur anti-adhérent imprimable, en tant que revêtement intérieur anti-adhérent mouillable localement avec des matériaux fluides et/ou en tant que caractéristique de sécurité.
